# EUROPÄISCHE PATENTSCHRIFT

(11) **EP 2 774 578 B1**
(45) Veröffentlichungstag und Bekanntmachung des Hinweises auf die Patenterteilung: **02.12.2015**
(21) Anmeldenummer: 14157753.6
(22) Anmeldetag: 05.03.2014
(51) Int. Cl.: A61C 13/08, A61C 13/00

(54) **Verfahren zur Herstellung eines Zahnersatzteils**
Method for producing a dental prosthesis
Procédé de fabrication d'une prothèse dentaire

(30) Priorität: 05.03.2013 DE 102013203750
(43) Veröffentlichungstag der Anmeldung: 10.09.2014
(62) Teilanmeldung aus: 14194032.0
(73) Patentinhaber: Sirona Dental Systems GmbH, 64625 Bensheim (DE)
(72) Erfinder: Saliger, Günter, 64625 Bensheim (DE)
(74) Vertreter: Sommer, Peter

(56) Entgegenhaltungen:
- EP-A1- 2 486 892
- WO-A1-2010/010082
- WO-A1-2013/060460
- DE-B3-102006 021 640
- US-A1- 2005 132 928

## Beschreibung

### Technisches Gebiet

Die vorliegende Erfindung betrifft ein Verfahren zur Herstellung eines Zahnersatzteils.

### Stand der Technik

Die menschlichen Zähne besitzen hinsichtlich ihrer Farbe eine gewisse natürliche Vielfalt. Neben individuellen Aspekten spielen für deren Farbe Genetik, Alter, Ernährungsgewohnheiten und Tabakkonsum eine wesentliche Rolle. In der Zahntechnik haben sich verschiedene Beschreibungen für die Farben von menschlichen Zähnen herausgebildet. Hauptsächlich sind hier die VITA Klassikfarben und die VITA 3D-Masterfarben zu nennen. Zu jeder am Markt befindlichen Farbsystematik gehören Farbmusterzähne, die der Zahnarzt nutzen kann, um unmittelbar im Patientenmund durch einen direkten Vergleich mit den benachbarten Zähnen eine Festlegung der Zahnfarbe des benötigten Zahnersatzes zu treffen. In den letzten Jahren sind zudem eine Reihe von Geräten entwickelt worden, die unter anderem durch eine spektroskopische Analyse des von einem Zahn reflektierten Lichts eine Bestimmung der Zahnfarbe erlauben. Vorzugsweise geben diese Geräte ihre Messwerte gleich in der vom Anwender gewünschten Farbsystematik an. Der Zahntechniker, der nun die Aufgabe hat, einen gewünschten Zahnersatz herzustellen nutzt hierzu im Regelfall die Farbangaben des Zahnarztes, die nach den oben beschriebenen Methoden ermittelt wurden. Zahntechniker stellen keramische Restaurationen durch eine Schichtung von Keramikmassen her, die hinsichtlich Farbe und Opazität unterschiedlich sind. Die Grundlage ihrer Arbeit bilden Gerüste aus Metall oder Keramik. Die Zahntechniker erzielen die vom Zahnarzt gewünschte Farbe mithilfe von Rezepturen, die Hersteller dieser Verblend- und Schichtmassen aufgestellt haben. Diese Rezepturen beschreiben im Wesentlichen welche Schichtung der Zahntechniker mit welchen Verblendmassen auszuführen hat, um eine vom Zahnarzt gewünschte Farbe zu erzielen. Daneben nutzt der Zahntechniker seine Erfahrung und sein Geschick, um die Form und das Aussehen der Zähne weiter zu analysieren.

Die Herstellung von ästhetisch ansprechendem Zahnersatz mittels CAD/CAM-Verfahren (Computer Assisted Design/Computer Assisted Manufacturing) unter Verwendung vorgefertigter Rohlinge gestaltet sich schwierig, insbesondere wenn es um Frontzahnrestaurationen geht. Zwar ermöglichen automatisierte CAD/CAM-Verfahren eine hohe gleichbleibende Qualität und Passgenauigkeit des Zahnersatzes bei gleichzeitig günstigen Preisen. Um jedoch dem Vorbild natürlicher Zähne möglichst nahezukommen und ästhetischen Anforderungen, insbesondere hinsichtlich der Farbgebung zu entsprechen, wird oftmals eine Größen- bzw. Farbvariation des aus einem Formblock gefrästen Zahnersatzteils notwendig. Hierzu sind aus dem Stand der Technik mehrfarbige Kunststoffformkörper mit vorgegebenen variierenden Farbschichten, welche um einen Kern angeordnet sind, zur Verwendung in der Herstellung als Zahnersatz bekannt. Ein Nachteil dieser Formkörper ergibt sich unter anderem daraus, dass zur Herstellung einer passgenauen Zahnkrone bei gegebenem Stumpf dieser mit genügend Dentinmaterial abgedeckt werden muss, um eine natürlich Farbwirkung zu erzielen.

In CAD/CAM-Geräten werden industriell vorgefertigte Blöcke verwendet. Diese Blöcke waren anfänglich einfarbig und erzeugten lediglich durch ihre hohe Transluzenz einen für den Seitenzahnbereich hinreichenden Farbeindruck durch den sogenannten Chamäleoneffekt. Frontzahnkronen und Veneers wurden zur Verbesserung der Ästhetik hintermalt. In der Nachfolge wurden in ebenen Lagen angeordnete mehrfarbige Blöcke entwickelt, um für den Frontzahnbereich bessere Lösungen offerieren zu können. Inzwischen ist man auch in der Lage, die Grenzflächen zwischen den einzelnen Werkstoffschichten als gekrümmte Flächen auszubilden. Wenn nun der Zahnarzt in Analogie zur klassischen Farbnahme einen Block der entsprechende Farben an einen Nachbarzahn hält, um die erforderliche Farbe zu ermitteln, erlebt er regelmäßig, dass die Farbe der fertigen Restauration wenig mit der ursprünglichen Blockfarbe zu tun hat. Dieser Effekt erklärt sich zum einen aus der Schichtstärkenabhängigkeit der Farbe von Dentalkeramiken und zum anderen aus der hohen Transluzenz der Keramiken, aufgrund derer beispielsweise der Zahnstumpf durchscheinen kann, so dass die resultierende Farbe verfälscht wird.

Die WO 2010 / 010 082 A1 beschreibt einen Zahnersatzformblock, welcher einen ersten Bereich aufweist, der aus einem Material besteht, welches das Dentin des Zahnes nachbildet, und einen zweiten Bereich aufweist, der aus einem transluzenten Material besteht, das den Schmelz des Zahnes nachbildet. Der Dentinbereich ist in den Schmelzbereich unter Ausbildung einer Grenzfläche eingebettet. Aus diesem Zahnersatzblock wird der Zahnersatz maschinell, beispielsweise mittels CAD / CAM Verfahren, hergestellt.

Der vorliegenden Erfindung liegt daher die Aufgabe zugrunde, ein Verfahren bereitzustellen, welches eine einfache, kostengünstige Größen- und Farbvariation eines herzustellenden Zahnersatzteils gestattet.

### Darstellung der Erfindung

Diese Aufgabe wird durch das erfindungsgemäße Verfahren zur Herstellung eines Zahnersatzteils gelöst. Dieses Verfahren umfasst das Bereitstellen eines Datensatzes eines Zahnersatzteils zur Verwendung in einem CAD/CAM-Verfahren, das Bereitstellen von Referenzdaten optischer Eigenschaften unterschiedlicher Dentinmaterialien und transluzenter Schmelzmaterialien des Zahnersatzteils und einer Beziehung zwischen diesen optischen Eigenschaften, gewünschten optischen Eigenschaften des Zahnersatzteils und Abmessungen des Zahnersatzteils, das Auswählen der gewünschten Farbe, in der das Zahnersatzteil gefertigt werden soll, das Bestimmen eines ersten Sollwertes der optischen Eigenschaften eines Dentinbereiches des Zahnersatzteils, das Bestimmen eines zweiten Sollwertes der optischen Eigenschaften eines Schmelzbereiches des Zahnersatzteils, das Bestimmen eines dritten Sollwertes einer Dicke des Schmelzbereiches des Zahnersatzteils, das Auswählen und Bereitstellen eines Zahnersatzformblocks, welcher einen Dentinbereich aufweist, der aus einem Material besteht, dessen optische Eigenschaften dem ersten Sollwert entsprechen und einen Schmelzbereich aufweist, der aus einem transluzenten Material besteht, dessen optische Eigenschaften dem zweiten Sollwert entsprechen und in den der Dentinbereich unter Ausbildung einer Grenzfläche eingebettet ist, wobei die Grenzfläche eine erste Dentinfläche und eine zweite Dentinfläche aufweist, das Auswählen einer Dentinfläche in Abhängigkeit von der gewünschten Form und Farbe des Zahnersatzteils und das Herstellen eines Zahnersatzteils nach dem CAD/CAM-Verfahren mittels Materialabtragung aus dem Zahnersatzformblock wobei die Dicke des transluzenten Materials parallel der ausgewählten Dentinfläche auf den dritten Sollwert verringert wird. Die Auswahl des Zahnersatzformblocks erfolgt insbesondere aus einem vordefinierten Sortiment von Zahnersatzformblöcken.

Bevorzugt umfassen die optischen Eigenschaften des Dentinmaterials unterschiedliche Farbwerte. Weiterhin ist es bevorzugt, dass die optischen Eigenschaften des transluzenten Materials unterschiedliche Transluzenzwerte umfassen. Die Erfindung geht davon aus, dass nur die unmittelbar sichtbaren Flächen eines Zahns eine hinreichend gute Ästhetik erhalten müssen. Im Frontzahnbereich sind das die Labial- und im Seitenzahnbereich die Okklusalflächen der Zähne. Die anderen Flächen spielen bei dem erfindungsgemäßen Verfahren eine untergeordnete Rolle.

Die Beziehung ist vorzugsweise eine funktionale Beziehung und/oder eine empirische Beziehung. Weiterhin ist es bevorzugt, dass der erste Sollwert, der zweite Sollwert und der dritte Sollwert in Abhängigkeit von optischen Eigenschaften von Zähnen ausgewählt werden, wobei das Zahnersatzteil dazu vorgesehen ist, benachbart zu diesen Zähnen in einem Kiefer angeordnet zu werden. Hierbei wird berücksichtigt, dass die Farbe von Verblendkeramiken von deren Schichtstärke abhängt. Der zugrunde liegende Effekt ist in der Physik als Rayleigh-Streuung bekannt. In dem erfindungsgemäßen Verfahren kann nun die Schichtdickenabhängigkeit der einhüllenden Schmelzmassen in Verbindung mit der Farbe der inneren Strukturen des Zahnersatzformblocks berücksichtigt werden, um aus einem vorhandenen Sortiment von Zahnersatzformblöcken einen geeigneten Block auszuwählen.

Das erfindungsgemäße Verfahren kommt in Verbindung mit Zahnersatzformblöcken zur Anwendung, die eine innere Struktur und hinsichtlich der Form, der Farbe und der Transluzenz Eigenschaften von natürlichen Zähnen aufweisen. Diese inneren Strukturen sind von einer weiteren Masse umhüllt, die hinsichtlich Farbe und Transluzenz den Eigenschaften von natürlichem Zahnschmelz nahekommt. Dabei ist es bevorzugt, dass das Material des Dentinbereiches und das Material des Schmelzbereiches jeweils unabhängig voneinander aus der Gruppe bestehend aus Keramikwerkstoffen und Acrylaten ausgewählt sind. Es ist besonders bevorzugt, dass der Dentinbereich und der Schmelzbereich aus demselben Material bestehen. Weiterhin ist es bevorzugt, dass der Dentinbereich und der Schmelzbereich eine unterschiedliche Pigmentierung aufweisen. Dabei moduliert der Schmelzbereich die Farbwahrnehmung durch unterschiedlich ausgeprägte Transparenz und insbesondere Dicke. Die Farbwirkung ergibt sich jedoch überwiegend aus der Dentinfarbe.

Der Dentinbereich ist vorzugsweise auf eine Dentinbasisfläche aufgesetzt, wobei die Dentinbasisfläche die gesamte Basisfläche des Zahnersatzformblocks bildet.

Die Dentinflächen sind vorzugsweise gekrümmte Flächen, die in approximaler Richtung einen gemeinsamen Schnittbereich, besonders bevorzugt eine gemeinsame Schnittlinie bilden. Weiter ist es bevorzugt, dass die erste Dentinfläche und die zweite Dentinfläche gegenüberliegende Flächen des Dentinbereiches ausbilden. So lässt sich beispielsweise aus zwei verschiedenen entgegengesetzten Richtungen des Zahnersatzformblocks wahlweise ein verschieden großes bzw. verschieden farbiges Zahnersatzteil herstellen, wobei die resultierenden Labialflächen vorzugsweise einem Schneideund/oder Eckzahn zuordenbar sind bzw. die resultierenden Okklusialflächen vorzugsweise einem Seitenzahn zuordenbar sind. Das Profil der ersten und zweiten Dentinfläche weist über die gesamte Fläche eine schwach konvexe Krümmung auf und verjüngt sich zum Zahnhals oder zur Zahnspitze hin. Die gaumenseitige Fläche, d.h. die Palatinalfläche des so erstellbaren Zahnersatzteils ist mehr oder weniger tief ausgehöhlt und schneidet gegebenenfalls zumindest teilweise den Dentinbereich, jedoch ist dieser Teil nach außen nicht sichtbar.

Bevorzugt wird das transluzente Material derart abgetragen, dass die Farbe des resultierenden Zahnersatzteils durch die gewählte Dentinfläche und die Schichtdicke des Schmelzbereiches bestimmt wird. Dabei kann die erforderliche Schichtdicke des Schmelzbereiches erheblich von der anatomischen Schmelzschichtdicke abweichen.

Das Zahnersatzteil ist insbesondere eine Krone oder ein Veneer für einen Frontzahn oder einen Eckzahn. Hierbei kommen die vorteilhaften optischen Eigenschaften des mit dem erfindungsgemäßen Verfahren erzeugen Zahnersatzteils besonders zur Geltung. Der erste Sollwert (S₁), der zweite Sollwert (S₂), und der dritten Sollwert (S₃) werden hierbei insbesondere nur bezüglich der Labialfläche des Frontzahns oder Eckzahns bestimmt. Sofern geeignete Dentinformen vorliegen kann das erfindungsgemäß hergestellte Zahnersatzteil jedoch grundsätzlich an jeder beliebigen Position im Kiefer eingesetzt werden. Wenn das Zahnersatzteil eine Krone oder ein Veneer für einen Seitenzahn ist werden der erste Sollwert, der zweite Sollwert, und der dritte Sollwert insbesondere nur bezüglich der Okklusalfläche des Seitenzahns bestimmt.

### Kurze Beschreibung der Zeichnungen

Ausführungsbeispiele der Erfindung sind in den Zeichnungen dargestellt und in der folgenden Beschreibung näher erläutert.
Fig. 1 zeigt ein Ablaufschema eines Verfahrens gemäß einer Ausführungsform der Erfindung.
In Fig. 2 ist ein Zahnersatzformblock dargestellt, welcher in einem Verfahren gemäß einer Ausführungsform der Erfindung verwendet wird.
Fig. 3a zeigt in einem a-b-Diagramm die Schichtdickenabhängigkeit von A2-Farbwerten mittels einer Ausführungsform des erfindungsgemäßen Verfahrens herstellbarer Zahnersatzteile.
Fig. 3b zeigt in einem a-L-Diagramm die Schichtdickenabhängigkeit von A2-Farbwerten mittels einer Ausführungsform des erfindungsgemäßen Verfahrens herstellbarer Zahnersatzteile.
Fig. 3c zeigt in einem b-L-Diagramm die Schichtdickenabhängigkeit von A2-Farbwerten mittels einer Ausführungsform des erfindungsgemäßen Verfahrens herstellbarer Zahnersatzteile.

### Ausführungsbeispiele

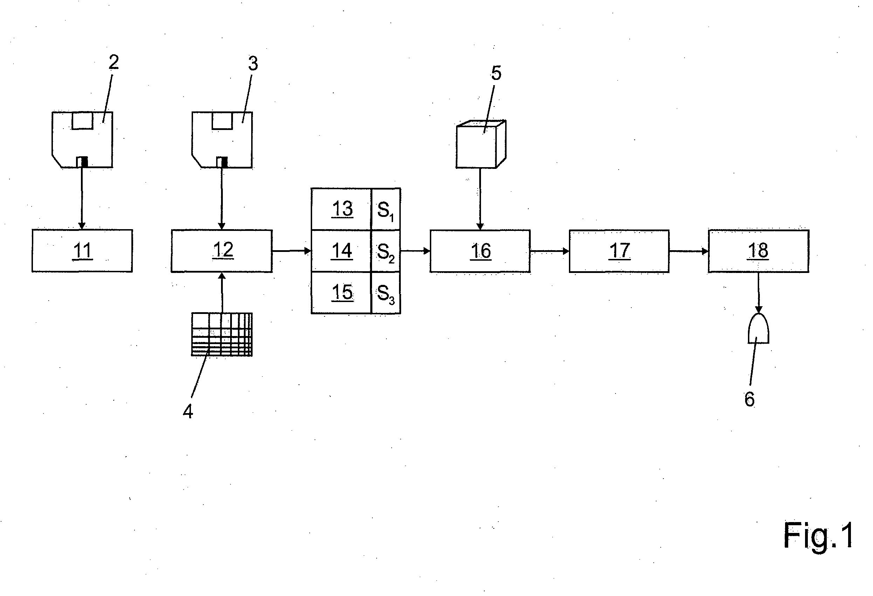

In einer beispielhaften Ausführungsform des erfindungsgemäßen Verfahrens, deren Ablauf in Fig. 1 dargestellt ist, wird in einem ersten Verfahrensschritt 11 ein Datensatz 2 eines herzustellenden Zahnersatzteils 6 zur Verwendung in einem CAD/CAM-Verfahren bereitgestellt, welcher beispielsweise von einem Zahnarzt unter Verwendung einer intraoralen Kamera aufgenommen wurde (beispielsweise CEREC AC Bluecam oder Omnicam der Anmelderin). Dazu wird das zu versorgende Areal des Kiefers nach der Herstellung einer Präparation in seiner topografischen Gestalt abgetastet. Dies kann unmittelbar und direkt geschehen oder es kann mithilfe eines Positiv- oder Negativabdrucks dieses Gebietes indirekt erfolgen. Danach wird in der CAD/CAM-Software mithilfe bekannter Verfahren eine Modellation des erforderlichen Zahnersatzteils 6 durchgeführt. Weiterhin erfolgt eine Bereitstellung 12 von Referenzdaten 3 optischer Eigenschaften unterschiedlicher verfügbarer Dentinmaterialien und transluzenter Schmelzmaterialien des Zahnersatzteils 6 und einer Beziehung 4 zwischen diesen optischen Eigenschaften, gewünschten optischen Eigenschaften des Zahnersatzteils 6 und Abmessungen des Zahnersatzteils 6. Die Referenzdaten 3 werden vom Hersteller eines Zahnersatzformblocks 5 bereitgestellt. Die Beziehung 4 kann als funktionale Beziehung oder als empirische Beziehung in einer Software hinterlegt sein.

Der Anwender wählt die gewünschte Farbe aus, in der das Zahnersatzteil 6 gefertigt werden soll. Dies kann er unter Umständen für verschiedene Bereiche der Sichtfläche getrennt durchführen. Er kann zusätzliche Merkmale, wie beispielsweise eine generelle Opazität des Zahnersatzteils 6 angeben, die das Aussehen der Zähne beeinflussen. Hierzu erfolgt eine Bestimmung 13 eines ersten Sollwertes S₁ der optischen Eigenschaften eines Dentinbereiches und eine Bestimmung 14 eines zweiten Sollwertes S₂ der optischen Eigenschaften eines Schmelzbereiches des Zahnersatzteils 6 sowie eine Bestimmung 15 eines dritten Sollwertes S₃ einer Dicke des Schmelzbereiches des Zahnersatzteils 6.

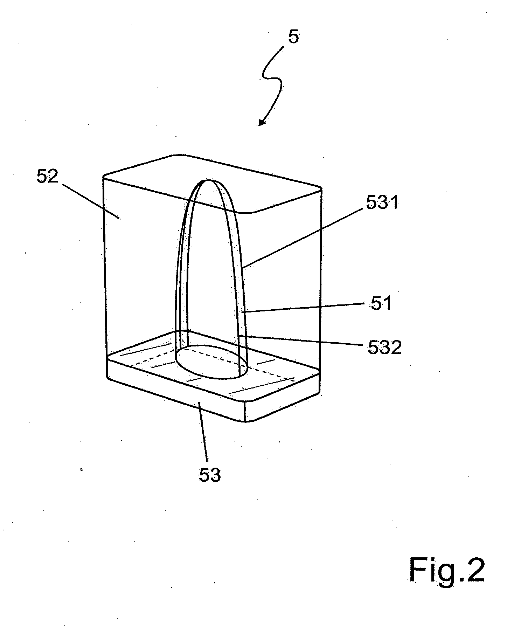

Es wird ein Sortiment von Zahnersatzformblöcken 5 definiert, das hinsichtlich der inneren Dentinstruktur und der Schmelzfarben auf den beabsichtigen Anwendungsfall zugeschnitten ist. Dabei wird zunächst diejenige innere Struktur ausgewählt, deren Sichtfläche bezüglich Größe, Form und Flächenkrümmung dem herzustellenden Zahnersatzteil 6 am ähnlichsten ist. Auf der Basis der vom Zahnarzt gewünschten Farbe wird derjenige Block aus dem Sortiment vorgeschlagen, der die bestmögliche Ästhetik realisiert. Dadurch erfolgt eine Bereitstellung 16 eines Zahnersatzformblocks 5, welcher in Fig. 2 dargestellt ist. Dieser weist einen Dentinbereich 51 auf, der aus einem Material besteht, dessen optische Eigenschaft dem ersten Sollwert S₁ entsprechen. Weiterhin weist er einen Schmelzbereich 52 auf, der aus einem transluzenten Material besteht, dessen optische Eigenschaften dem zweiten Sollwert S₂ entsprechen und in dem der Dentinbereich 51 unter Ausbildung einer Grenzfläche eingebettet ist. Der Dentinbereich 51 und der Schmelzbereich 52 können beispielsweise aus einem identischen Keramikwerkstoff bestehen, wobei die Transluzenz des Schmelzbereichs 52 und eine Opazität des Dentinbereichs 51 durch eine unterschiedliche Pigmentierung dieser beiden Bereiche 51, 52 erreicht wird. Der Dentinbereich 51 ist auf einer Dentinbasisfläche 54 aufgesetzt, welcher die gesamte Basisfläche des Zahnersatzformblocks 5 bildet. Die Grenzfläche weist eine erste Dentinfläche 531 und eine zweite Dentinfläche 532 auf. Diese Dentinflächen 531, 532 sind konvex gekrümmte Flächen, die in approximaler Richtung einen gemeinsamen Schnittbereich bilden. In Abhängigkeit von der gewünschten Form und Farbe des Zahnersatzteils 6 erfolgt eine Auswahl 16 zumindest einer Dentinfläche 531, 532. Die Sichtfläche der Restauration wird gegen die Dentinfläche 531, 532 des Zahnersatzformblocks 5 geneigt, parallel oder senkrecht dazu verschoben, bis die vorgegebenen Farben bestmöglich erreicht sind. Das Herstellen 17 des Zahnersatzteils 6 erfolgt dann schließlich nach dem CAD/CAM-Verfahren mittels Abtragung des transluzenten Materials an der ausgewählten Dentinfläche 531, wobei dessen Dicke auf den dritten Sollwert S₃ verringert wird. Hierzu wird ein dentales CAD/CAM-System (beispielsweise CEREC AC + MC XL der Anmelderin) verwendet, auf welchem eine Ausführungsform des erfindungsgemäßen Verfahrens als Computerprogramm implementiert ist.

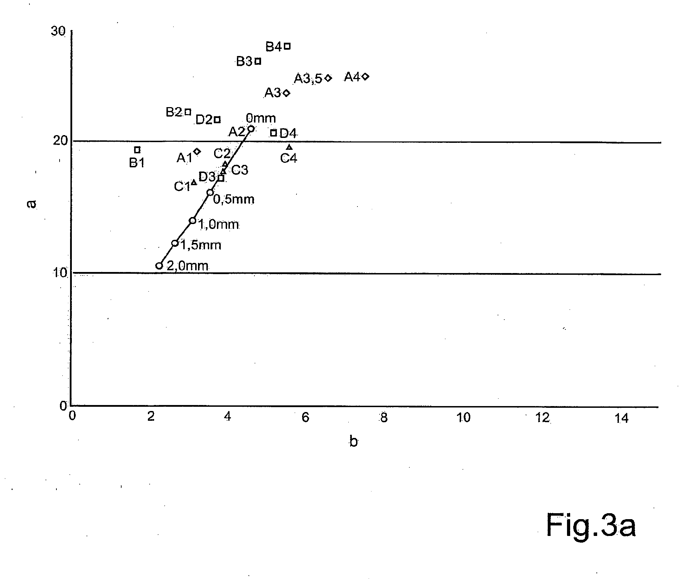

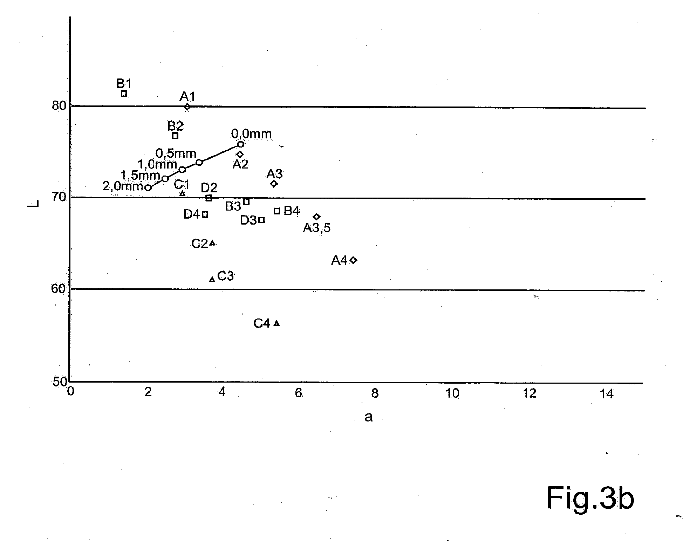

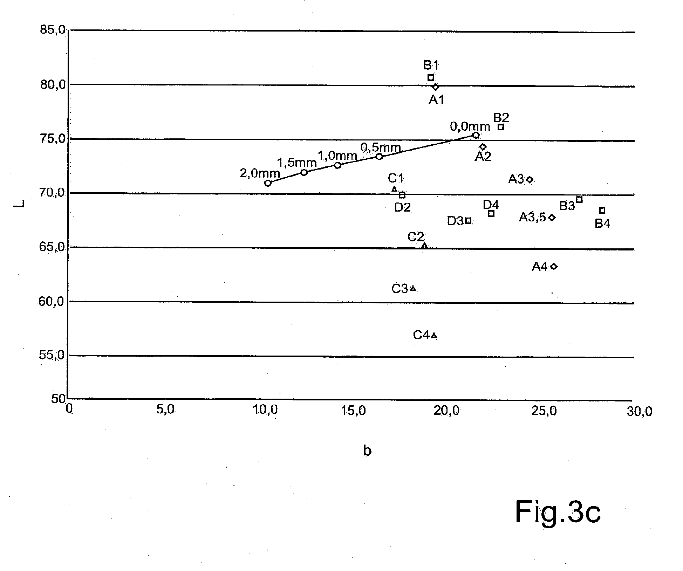

In den Fig. 3a - 3c wird gezeigt, welche VITA-Farben im Lab-Farbraum gemäß EN ISO 11664-4 mit einem beispielhaften Dentinkern erzeugt werden können, der aus der Sichtrichtung einen 0 - 2,0 Millimeter dicken Schmelzbereich 52 trägt. Fig. 3a zeigt dabei einen a-b-Schnitt durch den Lab-Farbraum, Fig. 3b zeigt einen a-L-Schnitt und Fig. 3c zeigt einen b-L-Schnitt. Die A2-Farben sind in Schichtdickenstufen des Schmelzbereichs von je 0,5 Millimeter dargestellt. Ein Vergleich mit den Positionen der ebenfalls in den Fig. 3a - 3c dargestellten Dentalfarben A1 - A4, B1 - B4, C1-C4 und D1 - D4 zeigt, dass das erfindungsgemäße Verfahren die Herstellung von Zahnersatzteilen 6 ermöglicht, deren Farbe jener natürlicher Zähne gleicht.

Das erhaltene Zahnersatzteil 6 kann beispielsweise als Krone oder als Veneer für einen Frontzahn, einen Eckzahn oder einen Seitenzahn verwendet werden.

## Patentansprüche

1. Verfahren zur Herstellung eines Zahnersatzteils (6), umfassend:
- Bereitstellen (11) eines Datensatzes (2) eines Zahnersatzteils (6) zur Verwendung in einem CAD/CAM-Verfahren,
- Bereitstellen (12) von Referenzdaten (3) optischer Eigenschaften unterschiedlicher Dentinmaterialien und transluzenter Schmelzmaterialien des Zahnersatzteils (6) und einer Beziehung (4) zwischen diesen optischen Eigenschaften, gewünschten optischen Eigenschaften des Zahnersatzteils (6) und Abmessungen des Zahnersatzteils (6),
- Auswählen der gewünschten Farbe, in der das Zahnersatzteil (6) gefertigt werden soll,
- Bestimmen (13) eines ersten Sollwertes (S₁) der optischen Eigenschaften eines Dentinbereiches des Zahnersatzteils (6),
- Bestimmen (14) eines zweiten Sollwertes (S₂) der optischen Eigenschaften eines Schmelzbereiches des Zahnersatzteils (6),
- Bestimmen (15) eines dritten Sollwertes (S₃) einer Dicke des Schmelzbereiches des Zahnersatzteils (6),
- Auswählen und Bereitstellen (16) eines Zahnersatzformblocks (5), welcher
i) einen Dentinbereich (51) aufweist, der aus einem Material besteht, dessen optische Eigenschaften dem ersten Sollwert (S₁) entsprechen, und
ii) einen Schmelzbereich (52) aufweist, der aus einem transluzenten Material besteht, dessen optische Eigenschaften dem zweiten Sollwert (S₂) entsprechen und in den der Dentinbereich (51) unter Ausbildung einer Grenzfläche eingebettet ist,
wobei die Grenzfläche eine erste Dentinfläche (531) und eine zweite Dentinfläche (532) aufweist,
- Auswählen (16) einer Dentinfläche (531, 532) in Abhängigkeit von der gewünschten Form und Farbe des Zahnersatzteils (6), und
- Herstellen (17) eines Zahnersatzteils (6) nach dem CAD/CAM-Verfahren mittels Materialabtragung aus dem Zahnersatzformblock (5), wobei die Dicke des transluzenten Materials parallel zu der ausgewählten Dentinfläche (531, 532) auf den dritten Sollwert (S₃) verringert wird.

2. Verfahren nach Anspruch 1, wobei die optischen Eigenschaften des Dentinmaterials unterschiedliche Farbwerte umfassen.

3. Verfahren nach Anspruch 1 oder 2, wobei die optischen Eigenschaften des transluzenten Materials unterschiedliche Transluzenzwerte umfassen.

4. Verfahren nach einem der Ansprüche 1 bis 3, wobei die Beziehung (4) eine funktionale Beziehung und/oder eine empirische Beziehung ist.

5. Verfahren nach einem der Ansprüche 1 bis 4, wobei der erste Sollwert (S₁), der zweite Sollwert (S₂) und der dritte Sollwert (S₃) in Abhängigkeit von optischen Eigenschaften von Zähnen ausgewählt werden, wobei das Zahnersatzteil (6) dazu vorgesehen ist, benachbart zu diesen Zähnen in einem Kiefer angeordnet zu werden.

6. Verfahren nach einem der Ansprüche 1 bis 5, wobei das Material des Dentinbereiches (51) und das Material des Schmelzbereiches (52) jeweils unabhängig voneinander ausgewählt sind aus der Gruppe, bestehend aus Keramikwerkstoffen und Acrylaten.

7. Verfahren nach Anspruch 6, wobei der Dentinbereich (51) und der Schmelzbereich (52) aus demselben Material bestehen.

8. Verfahren nach einem der Ansprüche 1 bis 7, wobei der Dentinbereich (51) und der Schmelzbereich (52) eine unterschiedliche Pigmentierung aufweisen.

9. Verfahren nach einem der Ansprüche 1 bis 8, wobei der Dentinbereich (51) auf einer Dentinbasisfläche (54) aufgesetzt ist, wobei die Dentinbasisfläche (54) die gesamte Basisfläche des Zahnersatzformblocks (5) bildet.

10. Verfahren nach einem der Ansprüche 1 bis 9, wobei die Dentinflächen (531, 532) gekrümmte Flächen sind, die in approximaler Richtung einen gemeinsamen Schnittbereich bilden.

11. Verfahren nach einem der Ansprüche 1 bis 10, wobei das transluzente Material derart abgetragen wird, dass die Farbe des resultierenden Zahnersatzteils (6) durch die gewählte Dentinfläche (531, 532) und die Schichtdicke des Schmelzbereiches (52) bestimmt wird.

12. Verfahren nach einem der Ansprüche 1 bis 11, wobei das Zahnersatzteil (6) eine Krone oder ein Veneer für einen Frontzahn oder einen Eckzahn ist, wobei der erste Sollwert (S₁), der zweite Sollwert (S₂), und der dritte Sollwert (S₃) nur bezüglich der Labialfläche des Frontzahns oder Eckzahns bestimmt werden.

13. Verfahren nach einem der Ansprüche 1 bis 11, wobei das Zahnersatzteil (6) eine Krone oder ein Veneer für einen Seitenzahn ist, wobei der erste Sollwert (S₁), der zweite Sollwert (S₂), und der dritte Sollwert (S₃) nur bezüglich der Okklusalfläche des Seitenzahns bestimmt werden.

## Claims

1. Method for fabricating a dental prosthesis part (6), comprising:
- Provision (11) of a data set (2) of a dental prosthesis part (6) for use in a CAD/CAM process,
- Provision (12) of reference data (3) of the optical properties of various dentine materials and translucent enamel materials of the dental prosthesis part (6) and of a relationship (4) between these optical properties, the desired optical properties of the dental prosthesis part (6) and the dimensions of the dental prosthesis part (6),
- Selection of the desired color in which the dental prosthesis part (6) is to be fabricated,
- Determination (13) of a first set value (S₁) of the optical properties of a dentine area of the dental prosthesis part (6),
- Determination (14) of a second set value (S₂) of the optical properties of an enamel area of the dental prosthesis part (6),
- Determination (15) of a third set value (S₃) of a thickness of the enamel area of the dental prosthesis part (6),
- Selection and provision (16) of a dental prosthesis block (5), which
i) has a dentine area (51), which consists of a material whose optical properties correspond to the first set value (S₁) and
ii) has an enamel area (52), which consists of a translucent material whose optical properties correspond to the second set value (S₂) and within which the dentine area (51) is embedded forming a boundary surface,
whereby the boundary surface has a first dentine surface (531) and a second dentine surface (532),
- Selection (16) of a dentine surface (531, 532) depending on the desired shape and color of the dental prosthesis part (6), and
- Fabrication (17) of a dental prosthesis part (6) by the CAD/CAM process by removal of material from the dental prosthesis block (5), whereby the thickness of the translucent material parallel to the selected dentine surface (531, 532) is reduced to the third set value (S₃).

2. Method according to claim 1, whereby the optical properties of the dentine material include different color values.

3. Method according to claims 1 or 2, whereby the optical properties of the translucent material include different translucency values.

4. Method according to one of claims 1 to 3, whereby the relationship (4) is a functional relationship and / or an empirical relationship.

5. Method according to any of claims 1 to 4, whereby the selection of the first set value (S₁), the second set value (S₂) and the third set value (S₃) depends on the optical properties of teeth, whereby the dental prosthesis part (6) is intended to be arranged adjacent to these teeth in a jaw.

6. Method according to any of claims 1 to 5, whereby the material of the dentine area (51) and the material of the enamel area (52) are selected independently of each other from the group consisting of ceramic materials and acrylates.

7. Method according to claim 6, whereby the dentine area (51) and the enamel area (52) consist of the same material.

8. Method according to any of claims 1 to 7, whereby the dentine area (51) and the enamel area (52) differ in their pigmentation.

9. Method according to any of claims 1 to 8, whereby the dentine area (51) is mounted on a dentine base area (54), whereby the dentine base area (54) forms the entire base area of the dental prosthesis block(5).

10. Method according to any of claims 1 to 9, whereby the dentine surfaces (531, 532) are curved surfaces which in the approximal direction form a common interface.

11. Method according to any of claims 1 to 10, whereby the translucent material is removed in such a way that the color of the dental prosthesis part (6) thus produced is determined by the selected dentine surface (531, 532) and the layer thickness of the enamel area (52).

12. Method according to any of claims 1 to 11, whereby the dental prosthesis part (6) is a crown or a veneer for an incisor or a canine tooth, whereby the first set value (S₁), the second set value (S₂) and the third set value (S3) are only determined with regard to the labial surface of the incisor or canine tooth.

13. Method according to any of claims 1 to 11, whereby the dental prosthesis part (6) is a crown or a veneer for a posterior tooth, whereby the first set value (S₁), the second set value (S₂) and the third set value (S₃) are only determined with regard to the occlusal surface of the posterior tooth.

## Revendications

1. Procédé pour la fabrication d'une prothèse dentaire (6), consistant à :
- mettre à disposition (11) un enregistrement (2) d'une prothèse dentaire (6) pour une utilisation dans un procédé de CAO/FAO,
- mettre à disposition (12) des données de référence (3) de propriétés optiques de différents matériaux de dentine et de différents matériaux d'émail translucides de la prothèse dentaire (6) et d'une relation (4) entre ces propriétés optiques, les propriétés optiques souhaitées de la prothèse dentaire (6) et les dimensions de la prothèse dentaire (6),
- choisir la couleur souhaitée, dans laquelle la prothèse dentaire (6) doit être fabriquée,
- déterminer (13) une première valeur de consigne (S₁) des propriétés optiques d'une zone de dentine de la prothèse dentaire (6),
- déterminer (14) une deuxième valeur de consigne (S₂) des propriétés optiques d'une zone d'émail de la prothèse dentaire (6),
- déterminer (15) une troisième valeur de consigne (S₃) d'une épaisseur de la zone d'émail de la prothèse dentaire (6),
- choisir et mettre à disposition (16) un bloc de façonnage (5) de dent artificielle, qui
i) présente une zone de dentine (51) qui est constituée par un matériau dont les propriétés optiques correspondent à la première valeur de consigne (S₁) et
ii) présente une zone d'émail (52) qui est constituée par un matériau translucide, dont les propriétés optiques correspondent à la deuxième valeur de consigne (S₂) et qui est enrobée dans la zone de dentine (51) avec formation d'une interface,
l'interface présentant une première surface de dentine (531) et une deuxième surface de dentine (532),
- choisir (16) une surface de dentine (531, 532) en fonction de la forme et de la couleur souhaitées de la prothèse dentaire (6) et
- fabriquer (17) une prothèse dentaire (6) selon le procédé de CAO/FAO par élimination de matière du bloc de façonnage (5) de la dent artificielle, l'épaisseur du matériau translucide étant diminuée à la troisième valeur de consigne (S₃) parallèlement à la surface de dentine (531, 532) choisie.

2. Procédé selon la revendication 1, les propriétés optiques du matériau de dentine comprenant différentes valeurs de couleur.

3. Procédé selon les revendications 1 ou 2, les propriétés optiques du matériau translucide comprenant différentes valeurs de translucidité.

4. Procédé selon l'une quelconque des revendications 1 à 3, la relation (4) étant une relation fonctionnelle et/ou une relation empirique.

5. Procédé selon l'une quelconque des revendications 1 à 4, la première valeur de consigne (S₁), la deuxième valeur de consigne (S₂) et la troisième valeur de consigne (S₃) étant choisies en fonction de propriétés optiques de dents, la prothèse dentaire (6) étant destinée à être disposée à côté de ces dents dans une mâchoire.

6. Procédé selon l'une quelconque des revendications 1 à 5, le matériau de la zone de dentine (51) et le matériau de la zone d'émail (52) étant à chaque fois choisis indépendamment l'un de l'autre dans le groupe constitué par des matériaux céramiques et des acrylates.

7. Procédé selon la revendication 6, la zone de dentine (51) et la zone d'émail (52) étant constituées par le même matériau.

8. Procédé selon l'une quelconque des revendications 1 à 7, la zone de dentine (51) et la zone d'émail (52) présentant une pigmentation différente.

9. Procédé selon l'une quelconque des revendications 1 à 8, la zone de dentine (51) étant placée sur une surface de base (54) de dentine, la surface de base (54) de dentine formant la surface de base totale du bloc de façonnage (5) de la dent artificielle.

10. Procédé selon l'une quelconque des revendications 1 à 9, les surfaces de dentine (531, 532) étant des surfaces incurvées qui forment une intersection commune dans une direction proximale.

11. Procédé selon l'une quelconque des revendications 1 à 10, le matériau translucide étant éliminé de manière telle que la couleur de la prothèse dentaire (6) résultante est déterminée par la surface de dentine (531, 532) choisie et par l'épaisseur de couche de la zone d'émail (52).

12. Procédé selon l'une quelconque des revendications 1 à 11, la prothèse dentaire (6) étant une couronne ou une facette pour une incisive ou une canine, la première valeur de consigne (S₁), la deuxième valeur de consigne (S₂) et la troisième valeur de consigne (S₃) n'étant déterminées que par rapport à la surface labiale de l'incisive ou de la canine.

13. Procédé selon l'une quelconque des revendications 1 à 11, la prothèse dentaire (6) étant une couronne ou une facette pour une dent latérale, la première valeur de consigne (S₁), la deuxième valeur de consigne (S₂) et la troisième valeur de consigne (S₃) n'étant déterminées que par rapport à la surface occlusale de la dent latérale.
